Europäisches Patentamt

European Patent Office

Office européen des brevets

(19)

(11) Numéro de publication: **0 206 856**

**A1**

(12) **DEMANDE DE BREVET EUROPEEN**

(21) Numéro de dépôt: **86401041.8**

(22) Date de dépôt: **15.05.86**

(51) Int. Cl.⁴: **H05B 7/14 , H05B 7/085**

(30) Priorité: **21.05.85 FR 8507648**

(43) Date de publication de la demande:
**30.12.86 Bulletin 86/52**

(84) Etats contractants désignés:
**BE DE GB IT SE**

(71) Demandeur: **GRAPHITE SERVICES S.A.R.L.**
**Les tavaillons Résidence de Nant-Cruy**
**F-74700 Sallanches(FR)**

(72) Inventeur: **Holuigue, Claude René Albert**
**3808, Route du Plateau d'Assy**
**F-74190 Le Fayet(FR)**

(74) Mandataire: **Hagry, François**
**Cabinet François HAGRY Conseil en Brevets**
**d'Invention 52, avenue de la Gare**
**F-74100 Annemasse(FR)**

(54) Joint nipplé biconique fileté pour électrodes de four à arc électrique.

(57) La résistance mécanique d'un joint nipplé biconique entre deux électrodes est améliorée en augmentant l'épaisseur (11) de la paroi du logement de
nipple au niveau du dernier filet de nipple en prise
au fond du logement. L'augmentation de cette
épaisseur est obtenue de façon économique et sans
affaiblir le diamètre équatorial du nipple en utilisant
une conicité, définie par la tangente du demi-angle
au sommet du cône (14) supérieure à la valeur de
1/6 imposée par la norme internationale. Le risque
de dévissage ainsi créé peut être supprimé en
réduisant le pas du filetage (15) en même temps
que la conicité augmente. Le renforcement de
l'épaisseur de la paroi peut être effectué
sélectivement sur l'extrémité jugée la plus fragile de
l'électrode (607) par exemple en combinant une
augmentation de profondeur et de conicité du logement par rapport aux valeurs imposées par la norme
internationale. On pourra ainsi utiliser des nipples
dissymétriques pour assembler deux extrémités dont
les logements présentent des dimensions
différentes. Le logement le plus profond sera alors
placé au-dessus de son plan de joint dans la colonne, ce qui a l'avantage de limiter l'importance de la
chute de pointe lorsque ce joint arrive dans l'arc.

## Joint nipplé biconique fileté pour électrodes de four à arc électrique.

L'invention se rapporte à la conception des joints réalisés entre les électrodes consommables en carbone ou graphite utilisées sur les fours à arc électrique par exemple pour la fusion ou la réduction de métaux, réfractaires ou autres produits.

L'invention sera décrite en référence aux fours à arc de sidérurgie, sans que cette description soit limitative de ses applications.

Les colonnes d'électrodes de fours à arc sont généralement composées de trois tronçons d'électrodes, chaque tronçon étant assemblé au suivant par un joint nipplé. Chaque joint est constitué d'un nipple biconique muni d'un filetage et vissé dans le logement conique fileté alésé dans la face plane d'extrémité de chacune des électrodes en regard.

Le joint supérieur, situé immédiatement sous la pince d'amenée de courant, est le plus sollicité mécaniquement, car le moment des efforts de flexion exercés sur la colonne pendant la marche du four y est plus élevé qu'au joint inférieur. L'expérience montre que, dans l'état actuel de la technique, le joint est mécaniquement moins résistant que le corps des tronçons d'électrode et que, dans le case d'efforts suffisament importants, la rupture de la colonne s'effectue presque systématiquement au niveau du joint supérieur. De plus, les vibrations du four et des colonnes peuvent provoquer le dévissage des joints, ce qui augmente rapidemente leur fragilité et peut entraîner la casse du nipple.

Le joint inférieur, beaucoup plus chaud que son homologue, est le siège de contraintes liées aux dilatations différentielles du nipple et de l'électrode, qui peuvent entraîner la fissuration de la paroi du logement. Si cette fissure se propage jusqu'à la pointe de la colonne, celle-ci se détache et tombe dans le four.

Au cours du fonctionnement du four à arc, la pointe de la colonne d'électrodes subit une usure par oxydation, érosion, sublimation et délitement du matériau qui la constitue, carbone ou graphite.

Lorsque le tronçon inférieur est consommé, on rajoute un nouveau tronçon à la partie supérieure de la colonne. Un même joint nipplé occupe donc successivement les positions supérieures et inférieures dans la colonne et sera soumis successivement aux deux types de sollicitation décrits précédemment, ce qui rend sa conception particulièrement délicate.

Les ruptures de colonnes d'électrodes et les chutes de pointes perturbent gravement la marche du four électrique, et en augmentent son coût d'exploitation. Aussi les fabricants d'électrodes ont-ils déployé de nombreux efforts pour améliorer le comportement du joint nipplé.

Une partie de ces travaux vise à améliorer les caractéristiques des matériaux utilisés, à savoir:

-augmentation de la résistance à la flexion du nipple et de l'électrode.

-diminution des coefficients de dilatation volumiques, et amélioration des appariements des coefficients longitudinaux et transversaux du nipple et de l'électrode.

Une autre partie vise à apporter des modifications à la géométrie du joint nipplé, et peuvent se classer en deux chapitres:

-répartition des jeux d'usinage entre le nipple et chaque logement permettant de limiter les efforts d'éclatement engendrés sur la paroi du logement par la dilatation du nipple, comme dans les brevets FR 2469854 et US 4159184.

-diminution de la concentration de contraintes en fond du logement de nipple comme dans les brevets DE 2657952, US 4290709 ou US 4152533.

Enfin, de nombreux dispositifs visent à prévenir le dévissage du joint sous l'effet des vibrations du four comme dans les brevets DE 2143997, DE 2001212, ou US 4000026.

Ces modifications ont apporté une amélioration sensible du comportement des joints nipplés, par réduction de la fréquence des casses de colonne et des chutes de pointes.

Toutefois, eu égard aux caractéristiques des matériaux connus à ce jour, l'optimisation de la géométrie du joint nipplé d'une colonne d'électrodes pour four à arc ne peut être considérée comme achevée.

En effet, l'expérience montre que, dans le cas d'électrodes non imprégnées, la rupture de la colonne qui, on l'a vu, s'effectue presque systématiquement au niveau du joint supérieur de la dite colonne, se produit, dans la grande majorité des cas, par fracture de la paroi du logement de nipple au niveau du dernier filet de nipple en prise au fond de ce logement. Les quelques exceptions à cette règle sont généralement la conséquence d'un dévissage de la jonction. Dans ce cas, la rupture se produit le plus souvent au niveau du plan équatorial du nipple.

Les autres figures de casse de colonne d'électrodes sont très peu fréquentes et peuvent être négligées.

L'expérience montre également que les solutions connues pour réduire la fréquence des casses de colonnes d'électrodes de four à arc conduisent souvent à une augmentation de la fréquence ou de l'importance des chutes de pointes de colonne dans le four.

Le but de la présente invention est de diminuer la fréquence des casses de colonnes d'électrodes de four à arc, en améliorant la résistance mécanique des joints nipplés biconiques utilisés pour l'assemblage des électrodes de la colonne, tout en réduisant simultanément la fréquence et l'importance des chutes de pointes de colonne dans le four.

Pour ce faire, conformément à l'invention, on optimisera les dimensions du logement de nipple alésé dans chaque face d'extrémité de chaque électrode, et les dimensions correspondantes de la partie du nipple destinée à être vissée dans le dit logement:

-soit en utilisant, pour l'un au moins des deux logements de nipple alésés dans chaque électrode, des combinaisons particulières de la valeur de conicité du dit logement et de la valeur de l'épaisseur de la paroi du dit logement, épaisseur telle qu'elle est mesurée au niveau du sommet du dernier filet de nipple en prise au fond du dit logement.

-soit en utilisant, pour un des deux logements alésés dans chaque électrode, au moins une valeur de dimension différente de la valeur de la dimension correspondante utilisé pour l'autre logement alésé dans la dite électrode, les valeurs des dimensions de chaque logement étant choisies en fonction de la résistance mécanique de l'extrémité qui porte le dit logement, et/ou en fonction de la position de la dite extrémité par rapport au plan de joint avec l'électrode à laquelle la dite extrémité sera assemblée dans la colonne.

-soit en utilisant une combinaison de ces deux solutions.

Conformément à l'invention, les combinaisons particulières de valeurs d'épaisseur de paroi du logement de nipple, mesurée au niveau du sommet du dernier filet de nipple en prise au fond du dit logement, et de conicité du dit logement de nipple sont telles que:

-la dite conicité du dit logement de nipple soit supérieure ou égale à 0,17 et inférieure ou égale à 0,57

-et que, simultanément, le rapport de la dite épaisseur de la paroi du dit logement au rayon du corps de l'électrode dans laquelle le dit logement est alésé soit supérieur à la fois à 0,57 et à la valeur obtenue en additionnant 0,96 fois la dite conicité et 0,35.

Pour ce qui concerne la présente invention, on considèrera que la conicité de la partie du nipple vissée dans son logement est égale ou voisine de la conicité du dit logement: elle peut en être légèrement différente, comme par exemple préconisé par le brevet FR 2469854, ou très différente sur une petite partie de la profondeur du dit logement, comme par exemple préconisé par les brevets FR 2469854 et US 4152533, sans affecter l'efficacité ni la nouveauté de la présente invention.

Dans le cas où on emploie pour le logement de nipple une conicité supérieure à 1/6, valeur fixée par la norme internationale IEC 239, on pourra, conformément à l'invention, et dans la mesure où cela s'avère nécessaire pour limiter le risque de dévissage du joint nipplé, réduire le pas du filetage, pour le dit logement de nipple et pour la partie du nipple qui y est vissée, de façon que la valeur moyenne du sinus de l'angle que fait la tangente au sommet du filet avec le plan de joint des électrodes soit égale à la valeur moyenne que prend le sinus de cet angle dans le logement de nipple et le nipple décrits par la norme internationale IEC 239.

Les dimensions du logement de nipple qui, conformément à l'invention, peuvent prendre une valeur différente dans l'un et l'autre logement de nipple usinés dans une même électrode sont l'épaisseur de la paroi du logement, mesurée au niveau du sommet du dernier filet de nipple en prise au fond du dit logement, la profondeur du logement de nipple également mesurée au niveau du sommet du dernier filet de nipple en prise au fond du dit logement, la conicité du dit logement, le diamètre d'entrée du logement de nipple tel qu'il est mesuré au niveau de la face d'extrémité de l'electrode, et le pas du filetage usiné à l'intérieur du dit logement.

Parmi les critères qui permettent, conformément à l'invention, d'apprécier la résistance mécanique de chaque extrémité d'électrode, on peut citer:

-les caractéristiques analytiques de l'extrémité de l'électrode, comme par exemple la compacité, la résistance à la flexion ou à la traction, la texture, la densité,

-la position de l'extrémité de l'électrode au cours de son procédé de fabrication, comme par exemple l'extrémité sommet pendant la phase de cuisson de l'électrode.

Bien entendu, on peut utiliser d'autres critères d'appréciation de la résistance mécanique des extrémités d'électrodes sans sortir du cadre de la présente invention.

L'assemblage des dites électrodes, conformes à l'invention, pour former une colonne de four à arc également conforme à l'invention se fera

-soit en assemblant deux à deux les logements dont les valeurs des dimensions sont identiques

-soit en assemblant deux à deux les logements dont au moins une valeur de dimension est différente. Dans ce cas, on utilisera des nipples biconiques dont au moins une valeur de dimmension de la partie du dit nipple située d'un même côté du plan équatorial soit différente de la valeur de la dimension correspondante de la partie du dit nipple située de l'autre côté du dit plan équatorial.

Les dimensions du nipple qui, conformément à l'invention, peuvent prendre une valeur différente dans ou de part et d'autre du plan équatorial du dit nipple sont le diamètre équatorial du nipple, la conicité du nipple et le pas du filetage usiné sur le dit nipple. On pourra aussi utiliser des nipples dont la longueur est différente de part d'autre de leur plan équatorial, cette utilisation étant connue dans l'état antérieur de la technique, par exemple pour assembler deux électrodes à la transition entre deux lots dont les logements sont usinés suivant des normes ou standard différents. De tels nipples sont également décrits dans le brevet DE 3324692, et sont utilisés pour réduire la différence de résistance électrique de contact entre le nipple et chacune des deux électrodes qu'il assemble.

Les nipples utilisés pourront être, pour au moins une partie d'un même côté de leur plan équatorial, conformes à une norme internationale ou à un standard de forme adopté par un ou plusieurs fabricants, l'autre partie, de l'autre côté du dit plan équatorial, étant soit conforme à une norme ou un standard différents, soit conforme à aucune norme ni aucun standard connu. L'assemblage, conformément à l'invention, d'une électrode avec un tel nipple se fera de façon que la partie du dit nipple située à l'extérieur de l'électrode soit conforme à une norme internationale ou à un standard de forme adopté par un ou plusieurs fabricants, l'autre partie du dit nipple étant vissée à l'intérieur d'un logement de la dite électrode.

Conformément à l'invention, les deux logements alésés dans une même électrode pourront différer par leur profondeur, telle qu'elle est mesurée au niveau du sommet du dernier filet de nipple en prise en fond du dit logement. Dans ce cas, on pourra, toujours conformément à l'invention, former la colonne en assemblant deux à deux les logements dont la dite profondeur des dits logements est différente; on sera alors amené à utiliser des nipples biconiques filetés dont la longueur d'une partie du dit nipple située d'un même côté du plan équatorial, longueur telle qu'elle est mesurée perpendiculairement au plan équatorial entre le dit plan équatorial et le sommet du dernier filet de nipple en prise au fond du logement dans lequel la dite partie du dit nipple est vissée, est différente de la dite longueur de la partie du dit nipple située de l'autre côté du dit plan équatorial. L'assemblage, conformément à l'invention, d'une telle électrode avec un tel nipple se fera de façon que la partie du dit nipple dont la dite longueur est la plus importante soit vissée à l'intérieur de la dite électrode.

Le montage d'une colonne d'électrodes utilisant de tels nipples et de telles électrodes se fera de façon que l'extrémité de chaque électrode portant le logement de nipple dont la dite profondeur est la plus importante se trouve au-dessus du plan de joint avec l'électrode à laquelle la dite extrémité sera assemblée.

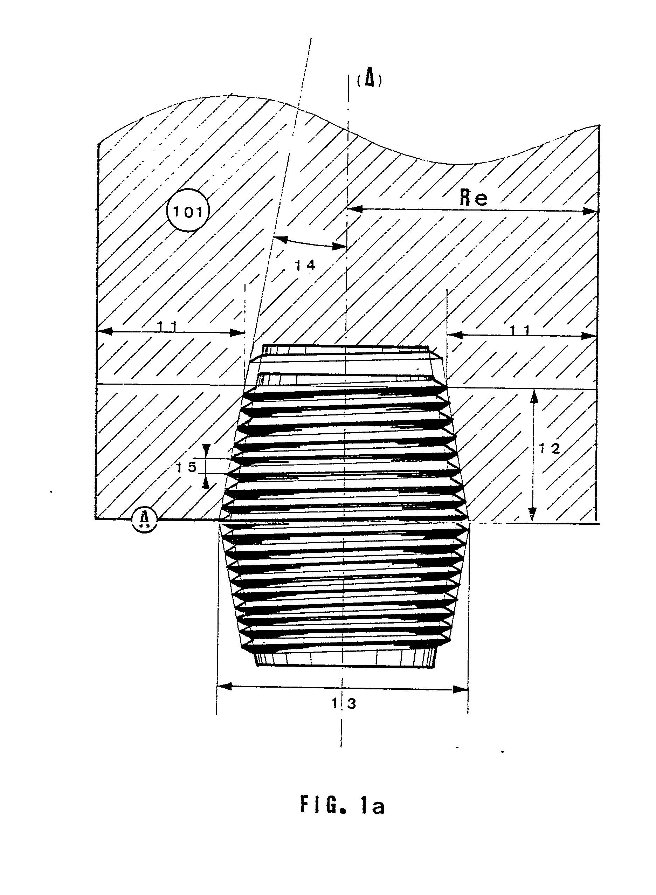

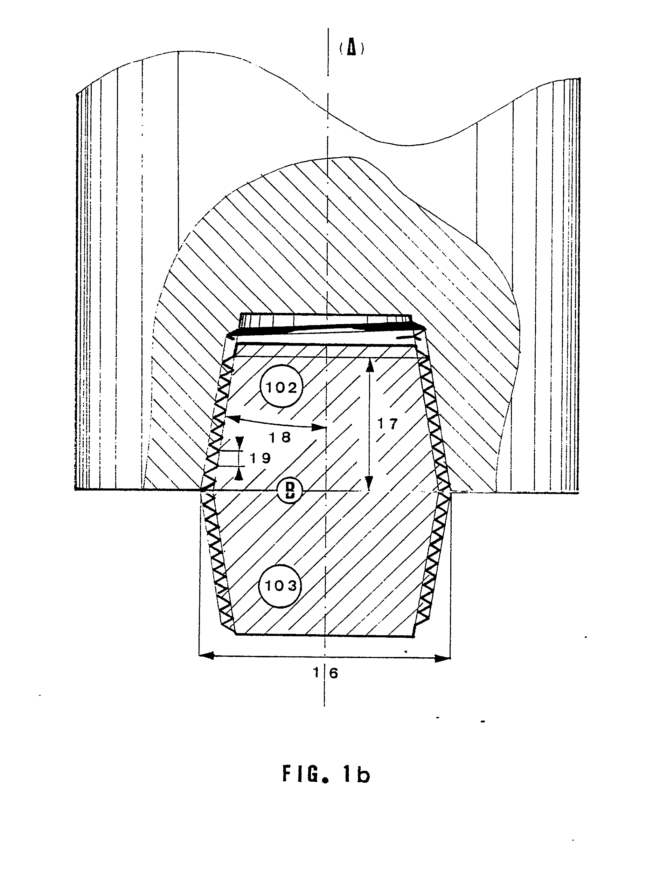

Les avantages de la présente invention par rapport à l'état antérieur de la technique, ainsi que quelques exemples non limitatifs des applications de la dite invention, sont exposés ci-après, en commentaires des figures 1 à 9. Dans les calculs, le dégagement de filet à chacune des extrémités de nipple a été évalué à 10 mm.

Les figures 1 a et 1 b représentent, vu en coupe partielle suivant un plan radial, l'assemblage d'une électrode et d'un nipple biconique fileté.

La figure 2 représente, vue en coupe suivant un plan radial, la répartition des contraintes engendrées dans un joint nipplé biconique conforme à la norme internationale par un effort de flexion F perpendiculaire à l'axe de la colonne.

La figure 3 représente, vue en coupe suivant un plan radial, la répartition des contraintes engendrées dans un joint nipplé biconique conforme à l'invention par le même effort de flexion F.

La figure 4 est un diagramme portant en abscisse la conicité C1 d'un logement de nipple et en ordonnée le rapport de l'épaisseur de la paroi du dit logement, telle qu'elle est mesurée au niveau du sommet du dernier filet de nipple en prise au fond du dit logement, au rayon du corps de l'électrode dans lequel le dit logement est alésé.

La figure 5 représente, vu en coupe suivant un plan radial, un joint nipplé biconique.

Les figures 6 a à 6 d représentent, vues en coupe partielle suivant un plan radial et à l'échelle 1/20, des électrodes de diamètre nominal 600 mm conformes à la présente invention.

Le tableau 1 résume les valeurs des dimensions des logements de ces électrodes.

Les figures 7 a à 7 f représentent, vus en coupe suivant un plan radial et à l'échelle 1/10, des nipples biconiques filetés pour électrodes de diamètre nominal 600 mm.

Le tableau 2 résume les valeurs des dimensions de ces nipples.

Les figures 8 a et 8 b représentent chacune, vu en coupe partielle suivant un plan radial, un assemblage conforme à l'invention d'un nipple et d'une électrode conforme à l'invention.

Les figures 9 a et 9 b représentent chacune, vue en coupe suivant un plan radial, une colonne d'électrodes conforme à la présente invention.

Sur les figures 1 a et 1 b sont portées les dimensions dont les valeurs sont concernées par l'invention et qui caractérisent le logement de nipple et la partie du nipple qui est vissée dans ce logement.

Pour simplifier et clarifier l'exposé, nous donnons ci-après la signification des termes utilisés dans la description des exemples d'application de l'invention, et dans les revendications de la dite invention;

-on appelle épaisseur utile 11 de la paroi du logement de nipple l'épaisseur de la dite paroi du dit logement, telle qu'elle est mesurée au niveau du sommet du dernier filet de nipple en prise au fond du dit logement, et perpendiculairement à l'axe de revolution $\Delta$ du corps de l'électrode 101; les filets du nipple sont considérés en prise avec les filets du logement alésé dans l'électrode tant qu'il existe un contact entre le flanc porteur du filet du dit nipple et le flanc porteur du filet du dit logement; de légères fluctuations dans les cotes d'usinage du nipple et de son logement, liées à la précision des méthodes d'usinage, font varier la pénétration du nipple à l'intérieur de son logement; l'imprécision qui en résulte quant à la détermination de l'épaisseur utile du logement, généralement inférieure à 1 mm, est négligeable dans le cadre de la présente invention.

D'une façon générale, les valeurs des dimensions concernées ou préconisées par l'invention sont des valeurs moyennes visées; les dispersions, enregistrées autour de ces valeurs, liées aux tolérences d'usinage, sont compatibles avec la présente invention, mais ne la concernent pas et ne l'affectent pas. De même, l'existence d'un jeu d'usinage légèrement différent entre un même nipple et deux logements identiques dans lesquels le dit nipple est vissé fait que la paroi de ces deux logements présente une épaisseur légèrement différente. Ces légères variations de dimension sont également compatibles avec la présente invention, mais ne la concernent et ne l'affectent pas plus.

-On appelle profondeur utile 12 du logement de nipple, la distance, mesurée parallèlement à l'axe de révolution $\Delta$ du corps de l'électrode entre la face d'extrémité A de l'électrode et le sommet du dernier filet de nipple en prise au fond du dit logement.

-On appelle diamètre d'entrée 13 du logement de nipple, le diamètre du dit logement, tel qu'il est mesuré au niveau de la face d'extrémité A de l'électrode qui porte le dit logement, perpendiculairement à l'axe de révolution $\Delta$ du corps de l'électrode.

L'épaisseur utile de la paroi du logement de nipple 11, la profondeur utile du logement 12 et le diamètre d'entrée du logement 13 sont mesurés au niveau du fond du filet usiné dans le dit logement.

-On appelle conicité C1 du logement de nipple, la tangente du demi-angle au sommet 14 du tronc de côné constituant la forme du logement du nipple. Il arrive, comme préconisé par exemple dans les brevets US 4152533 et FR 2469854, que la conicité d'un même logement prenne plusieurs valeurs différentes. Dans ce cas, on notera que la présente invention ne concerne que la valeur de conicité utilisée sur la plus grande partie de la profondeur utile du logement. Dans la pratique, tous les logements compatibles avec la norme IEC 239 ont une valeur de conicité égale ou très voisine de 1/6.

-Le pas de filetage 15 est également celui retenu sur la plus grande partie de la profondeur utile du logement.

-On appelle éléments géométriques primaires d'un logement de nipple les cinq dimensions ci-dessus définies, à savoir épaisseur utile de paroi 11, profondeur utile 12, diamètre d'entrée 13, conicité C1 et pas du filetage 15.

La forme d'un nipple biconique est constituée de deux troncs de cônes accolés par leur base. Le plan de base commun est appelé plan équatorial B du nipple.

-Un demi nipple est la partie du nipple 102 ou 103 située d'un même côté du plan équatorial.

-On appelle diamètre équatorial 16 du demi-nipple le diamètre du cercle de base du tronc de cône constituant la forme du demi-nipple.

-On appelle longueur utile 17 du demi nipple la distance, mesurée perpendiculairement au plan équatorial B, séparant le plan équatorial B du sommet du dernier filet du demi-nipple en prise au fond de son logement.

-Le diamètre équatorial 16 et la longueur utile 17 du demi-nipple sont mesurés au niveau du sommet du filet usiné sur le demi-nipple 102 ou 103.

- On appelle conicité C2 du demi-nipple la tangente du demi-angle au sommet 18 du tronc de cône constituant la forme du demi-nipple. Au cas où le demi-nipple présente plusieurs valeurs de conicités successives, on notera que la présente invention ne concerne que la conicité utilisée sur la plus grand partie de la longueur utile du demi-nipple. Dans la pratique, tous les demi-nipples compatibles avec la norme internationale IEC 239 ont une valeur de conicité égale ou très voisine de 1/6.

-Le pas du filetage 19 est également celui retenu sur la plus grande partie de la longueur utile du demi-nipple.

-On appelle éléments géométriques primaires d'un demi-nipple les quatre dimensions définies ci-dessus, à savoir diamètre équatorial 16, longueur utile 17, conicité C2 et pas du filetage 19.

-Notons que la définition de la valeur des éléments géométriques primaires de deux logements de nipple et de deux demi-nipples est insuffisante pour caractériser complètement un joint nipplé biconique entre deux électrodes. La valeur d'autres paramètres tels que la répartition des jeux d'usinage, l'angle au sommet du filet, le dégagement du filet, etc.. doit également être précisée.

Cependant, la définition de la valeur de ces paramètres, tout en étant compatible avec la présente invention, et venant la compléter utilement, n'entre pas dans son cadre, qui se limite donc à la définition de la valeur des dits éléments géométriques primaires de chaque logement et de chaque demi-nipple.

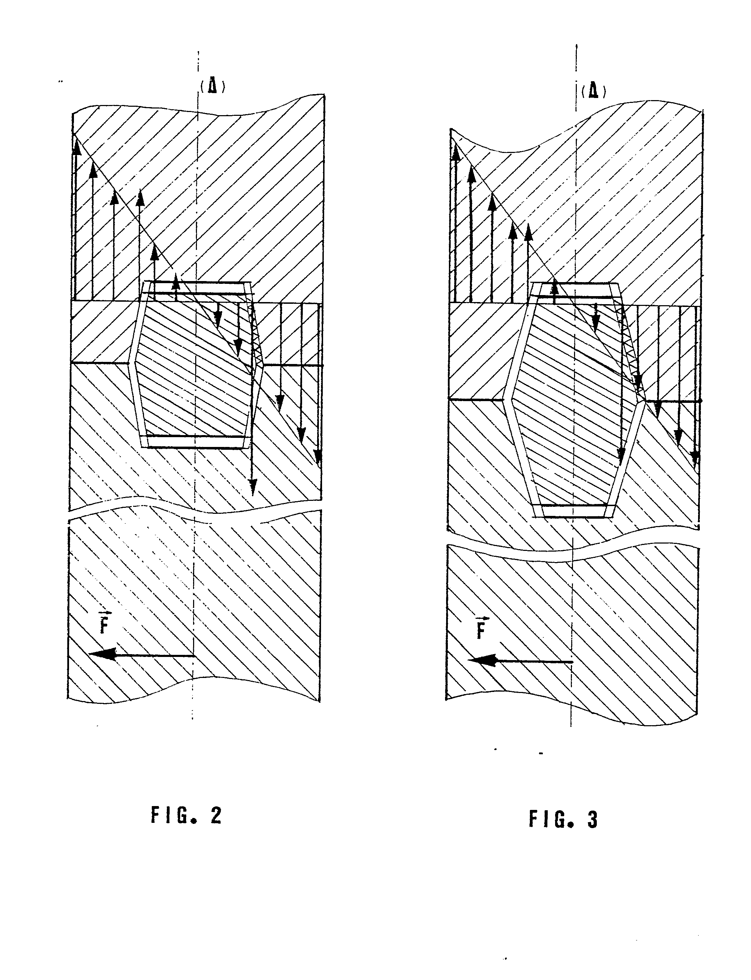

Sur la figure 2, on voit qu'un effort de flexion F exercé sur la colonne engendre des contraintes de traction sur une partie du joint nipplé, l'autre partie étant en compression. On constate un maximum de contrainte au niveau du dernier filet de nipple en prise avec le filet du fond de son logement dans l'électrode; la réduction de ce maximum de contrainte fait l'objet de nombreux brevets comme FR 2469854, DE 2657952, US 3708601, US 4152533 et US 4290709.

Sur la figure 3, on voit que, conformément à l'invention, le dernier filet de nipple en prise a été rapproché de la fibre neutre du joint qui est voisine de l'axe de révolution Δ du corps de l'électrode.

Cette disposition permet de réduire la valeur du maximum de contrainte en ce point. De plus, l'augmentation de l'épaisseur de la paroi du logement de nipple conduit à améliorer sa résistance aux contraintes de traction qu'elle subit. La réduction de la valeur du maximum de contrainte exercé sur la paroi, alliée à une amélioration simultanée de sa résistance à la traction entraîne une réduction sensible de sa fréquence de rupture qui est, rappelons-le, la cause la plus fréquente de casse de la colonne.

En comparant les figures 2 et 3 on voit que le diamètre du nipple dans son plan équatorial n'a pas été modifié, et donc que sa résistance mécanique n'est pas affectée par l'invention. On peut bein entendu modifier le diamètre équatorial du nipple, en augmentation ou en diminution, sans sortir du cadre de la présente invention.

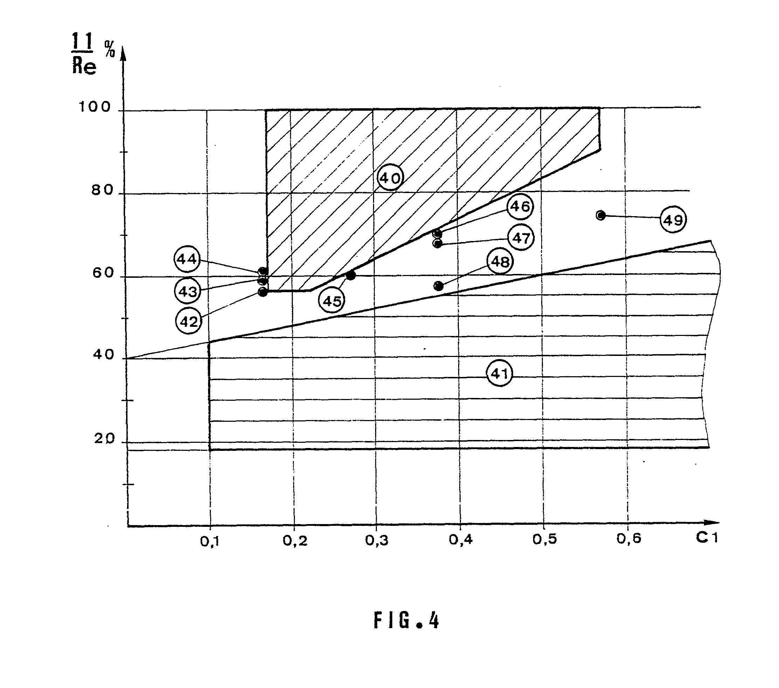

La figure 4 permet de comprendre la nouveauté et les avantages de la présente invention par rapport à l'état antérieur de la technique.

Sur ce diagramme, un logement de nipple et le demi-nipple associé sont représentés par deux paramètres:

La conicité C1 du logement et le rapport de l'épaisseur utile 11 de la paroi du logement au rayon Re de l'électrode. Un même point peut donc représenter deux associations différant par leur profondeur utile, leur diamètre d'entrée ou le pas du filetage. Par contre, deux points différents correspondent nécessairement à deux assocations différentes.

La zone 40, hachurée obliquement, est celle décrite par la présente invention:

$$0,17 \leqslant C1 \leqslant 0,57$$

$$\frac{(11)}{Re} \geqslant 0,57$$

$$\frac{(11)}{Re} \geqslant 0,96 \ C1 + 0,35$$

La zone 41, hachurée horizontalement, est celle décrite par le brevet US 3569609. Dans ce brevet, la conicité est limitée à une valeur inférieure à 2, et à partir de la valeur 1,5, on impose que le plus petit diamètre du nipple soit inférieur au 1/10 de la longueur du nipple. Ces limites n'ont pas été représentées sur le diagramme pour des raisons d'échelle.

Le point 42 correspond à l'association d'un logement de nipple et d'un nipple conformes à la norme internationale pour les électrodes de 600 mm de diamètre. On voit que l'épaisseur utile de la paroi du logement est inférieure aux valeurs préconisées par la présente invention, ce qui, toutes choses égales par ailleurs, entraîne une moins grande résistance mécanique du joint ainsi réalisé.

Le point 43 correspond à une association d'un logement de nipple avec un nipple au standard dit "long". Cette technique a pour but de réaliser une augmentation de la surface portante des filets, ce qui réduit la contrainte de traction exercée par unité de surface, et donc la concentration de contraintes en fond de logement. Cette solution est cependant coûteuse, puisque son prix de revient à la production est supérieur d'environ 3% à celui de l'association du logement de nipple et du nipple conformes à la norme internationale.

Le point 44 correspond à l'association d'un logement de nipple et d'un nipple au standard de l'électrode de 550 mm, utilisés avec une électrode de 600 mm. Cette technique est employée sur les fours où les colonnes présentent beaucoup d'oxydation latérale par rapport à l'usure de pointe, et a pour but de renforcer l'épaisseur de la paroi du logement à l'endroit où elle est la plus faible, c'est-à-dire au niveau de la face d'extrémité. Ceci permet de retarder la chute de la pointe de la colonne dans le bain provoquée par l'usure complète de la paroi du logement de nipple. Bien entendu, cette solution, qui affaiblit le nipple dans son plan équatorial, n'a pas d'intérêt pour l'objectif que nous visons.

Les points 45 à 49 correspondent aux logements compatibles avec les nipples décrits dans le brevet US 4290709. Cette invention expose que la seule augmentation de conicité permet d'obtenir une réduction des contraintes de traction en fond du logement de nipple, et néglige de prendre en compte l'optimisation de l'épaisseur utile de la paroi du dit logement. De fait, l'examen de la figure 4 montre que les valeurs de conicité retenues pour les points 45 à 49 sont en moyenne plus élevées que celles préconisées par la présente invention, alors que les épaisseurs utiles de paroi du logement y sont au contraire systématiquement inférieures.

Remarquons enfin que la zone 41 et les points 42 à 49 sont situés sur le diagramme de la figure 4 en dehors de la zone 40 qui est celle préconisée par la présente invention, ce qui démontre la nouveauté de l'invention par rapport à l'état antérieur de la technique.

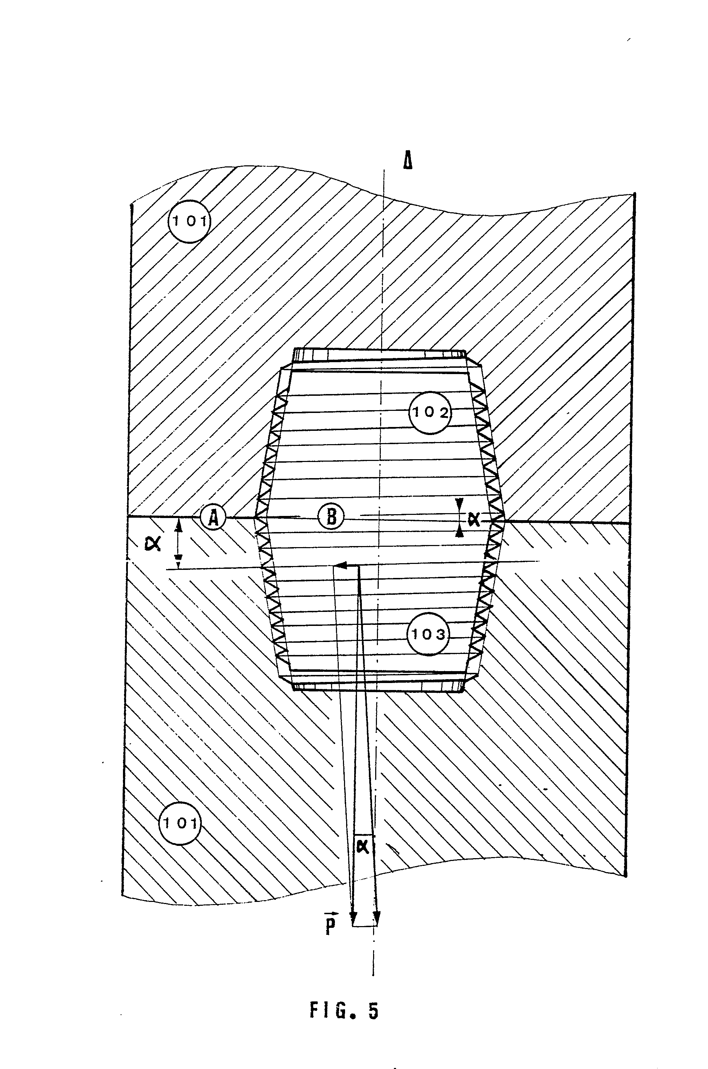

La figure 5 montre l'influence de la valeur de l'angle $\alpha$ que fait la tangente au sommet du filet avec le plan de joint des électrodes: le poids P de la colonne qui s'exerce verticalement peut se décomposer en une force de cisaillement perpendiculaire au filet et une force de dévissage parallèle au filet. Plus l'angle $\alpha$ est important, plus la composante de dévissage qui vaut $P \sin \alpha$ sera élevée.

Lorsque la conicité d'un logement et du demi-nipple qui y est vissé augmente, tous les autres éléments géométriques primaires restant par ailleurs constants, on voit que la valeur moyenne de l'angle $\alpha$ augmente.

La présente invention préconise, dans la mesure où cela s'avère nécessaire pour limiter le risque de dévissage du joint nipplé, de réduire le pas du filetage pour que, la conicité augmentant, la valeur moyenne de $\sin \alpha$ reste égale à ce qu'elle est dans le joint nipplé biconique décrit par la norme internationale.

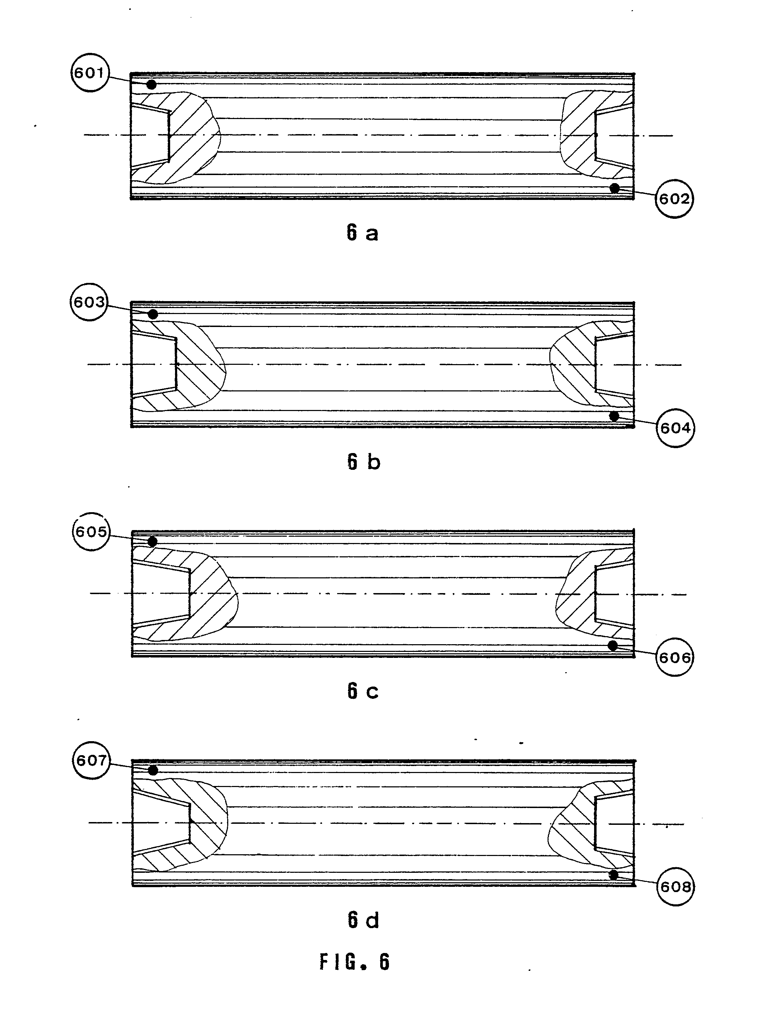

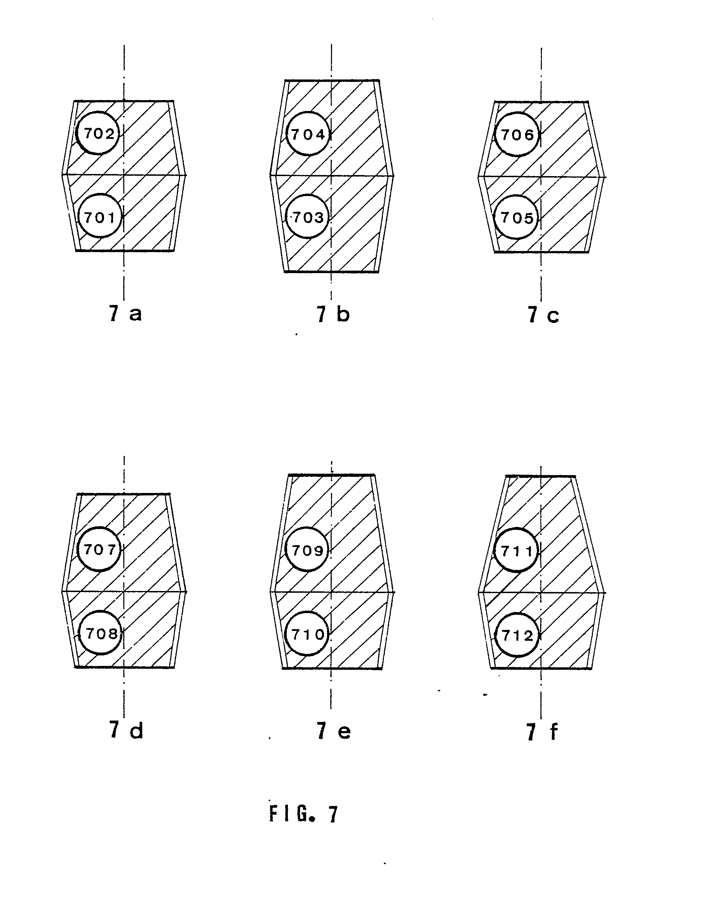

La figure 6 a représente une électrode qui, en association avec le nipple décrit par la figure 7 c, possède deux logements identiques et conformes à la présente invention; chaque logement présente un diamètre d'entrée de 318 mm, une profondeur utile de 168 mm, une épaisseur utile de paroi de 183 mm, soit 60% du rayon de l'électrode, qui mesure 305 mm, et une conicité de 0,22. Le pas du filetage est de 6,35 mm.

Les figures 6 b à 6 d représentent des électrodes dont au moins un des éléments géométriques primaires d'un logement présente une valeur différente de la valeur de l'élément géométrique primaire correspondant de l'autre logement.

Il ne faut pas confondre ces électrodes avec celles employées lorsque l'on veut, dans une même colonne, changer le standard du logement de nipple: pour passer d'un lot d'électrodes dont les éléments géométriques primaires de chaque logement sont tous deux conformes à un standard S1, à un autre lot dont les éléments géométriques primaires de chaque logement sont tous deux conformes à un standard S2, on utilise une électrode dite "électrode de transfert" dont un logement est conforme au standard S1 et l'autre logement est confirme au standard S2.

Bien entendu, dans ce cas, il est indifférent que ce soit l'une ou l'autre des extrémités qui porte le logement conforme au standard S1 ou S2. De même, la position de l'extrémité qui porte un logement conforme à un standard donné est imposée par le standard existant sur la colonne: l'extrémité qui porte le logement conforme au standard S1 se trouvera au-dessus ou en-dessous du plan de jonction avec l'électrode à laquelle cette extrémité est assemblée sur la colonne, suivant que le standard utilisé sur la colonne sera respectivement S1 ou S2.

Il en va tout autrement dans le cas de la présente invention: l'extrémité qui porte le logement dont les éléments géométriques primaires prennent un ensemble de valeurs données, sera choisie et/ou utilisée en fonction d'un critère déterminé; si, par exemple ce critère est la compacité de l'extrémité de l'électrode, c'est l'extrémité qui possède la compacité la plus faible dont le logement présentera par exemple l'épaisseur utile de paroi la plus importante ; si, dans un autre exemple, ce critère est la position dans la colonne de l'extrémité par rapport au plan de joint, l'extrémité dont le logement présente la plus grande profondeur utile sera placée au-dessus du plan de joint.

L'extrémité 603 de l'électrode représentée sur la figure 6 b est celle dont la compacité est la plus faible. Dans le but de renforcer sa résistance mécanique, elle porte un logement de nipple au standard dit "long". En association avec le demi-nipple 703 de la figure 7 b, ou 707 de la figure 7 d, ce logement a un diamètre d'entrée de 318 mm, une profondeur utile de 219 mm, une épaisseur utile de paroi de 182 mm, soit 60% du rayon de l'électrode et une conicité de 1/6. Le pas du filetage est de 6,35 mm.

L'extrémité 604 de l'électrode représentée sur la figure 6 b porte un logement de nipple confirme à la norme internationale. En association avec le demi-nipple 701 de la figure 7 a, ou 708 de la figure 7 d, ce logement a un diamètre d'entrée de 318 mm, une profondeur utile de 168 mm, une épaisseur utile de paroi de 174 mm soit 57% du rayon de l'électrode, et une conicité de 1/6. Le pas du filetage est de 6,35 mm.

L'électrode représentée sur la figure 6 b diffère d'une électrode de transfert entre un lot d'électrodes dont les logements sont conformes à la norme internationale et un autre lot d'électrodes dont les logements sont confirmes au standard "long" par le fait que le logement au standard "long" est nécessairement alésé dans une extrémité choisie en fonction de ses caractéristiques.

L'électrode représentée sur la figure 6 b pourrait également différer de cette même électrode de transfert par le fait que l'extrémité 603 qui porte le logement au standard "long" so it, dans la colonne, nécessairement utilisée au-dessus du plan de joint avec l'électrode à laquelle elle est assemblée dans le but de réduire l'importance de la chute de pointe liée à l'adoption du standard "long".

L'extrémité 605 de l'électrode représentée sur la figure 6 c présente une valeur de résistance à la flexion, mesurée sur une éprouvette prélevée dans cette extrémité, inférieure à la valeur mesurée sur l'extrémité 606. En association avec le demi-nipple 709 de la figure 7 e, ce logement a un diamètre d'entrée de 318 mm, une profondeur utile de 269 mm, une épaisseur utile de paroi de 191 mm soit 63% du rayon de l'électrode et une conicité de 1/6. Le pas du filetage est de 6,35 mm.

L'extrémité 606 de l'électrode représentée sur la figure 6 c porte un logement de nipple conforme à la norme internationale.

L'extrémité 605 sera de préférence utilisé au-dessus du plan de joint avec l'électrode à laquelle elle sera assemblée dans la colonne, afin de limiter l'importance de la chute de pointe que pourrait entraîner la grande profondeur utile de logement qu'elle porte.

L'extrémité 607 de l'électrode représentée sur la figure 6 d est celle qui occupait la position sommet au cours de l'opération de cuisson de l'électrode crue. Le logement alésé dans cette extrémité présente, en association avec le demi-nipple 711 décrit par la figure 7 f, un diamètre d'entrée de 318 mm, une profondeur utile de 269 mm, une épaisseur utile de paroi de 213 mm, soit 70% du rayon de l'électrode, et une conicité de 0,25. Le pas du filetage est de 5,35 mm et a été calculé pour que la valeur moyenne du sinus de l'angle que fait la tangente au sommet du filet avec le plan de la face d'extrémité de l'électrode soit égale à la valeur moyenne que prend le sinus de cet angle dans le logement conforme à la norme internationale, à savoir $7 \times 10^{-1}$.

Toutefois, dans les cas où le risque de dévissage du joint est faible, on pourra utiliser sans inconvénient le pas de 6,35 mm pour le filetage usiné dans ce logement.

Le fait d'utiliser une profondeur utile importante pour le logement alésé dans cette extrémité permet, en plus de la réduction des contraintes en fond de logement et de l'amélioration de la résistance mécanique de la paroi du logement, de détecter les éventuelles fissures internes présentes en sommet d'électrode; elle permet aussi d'améliorer la compacité de la matière constituant le fond du logement de nipple, en l'éloignant de la zone de mauvaise compacité souvent présente en sommet d'électrode.

L'extrémité 608 de l'électrode représentée sur la figure 6 d porte un logement de nipple conforme à la norme internationale.

Les nipples présentés par les figures 7 a et 7 b sont constitués de deux demi-nipples dont la valeur des éléments géométriques primaires est identique. Ces nipples sont conformes à l'état antérieur de la technique.

Les demi-nipples 701 et 702 constituant le nipple 7 a ont un diamètre équatorial de 317 mm, une longueur utile de 168 mm en association avec le logement alésé dans l'extrémité 604, et une conicité de 1/6. Le pas du filetage est de 6,35 mm. Ce nipple est conforme à la norme internationale.

Les demi-nipples 703 et 704 constituant le nipple décrit par la figure 7 b ont un diamètre équatorial de 317 mm, une longueur utile de 219 mm en association avec le logement alésé dans l'extrémité 603 et une conicité de 1/6. Le pas du filetage est de 6,35 mm. Ce nipple est conforme au standard dit "long".

Les demi-nipples 705 et 706 de la figure 7 c présentent, en association avec les extrémités 601 ou 602 de l'électrode de la figure 6 a, un diamètre équatorial de 317 mm, une longueur utile de 168 mm et une conicité de 0,22. Le pas du filetage est de 6,35 mm. Ce nipple est conforme à la présente invention.

Le nipple 7 d est constitué d'un demi-nipple inférieur 708 identique aux demi-nipples 701 et 702 de la figure 7 a et d'un demi-nipple supérieur 707 identique aux demi-nipples 703 et 704 de la figure 7 b. Ce nipple est utilisé pour assembler une électrode au standard dit "long" à une électrode conforme à la norme internationale.

Le nipple 7 e est constitué d'un demi-nipple inférieur 710 identique aux demi-nipples 701 et 702, et d'un demi-nipple supérieur 709 dont le diamètre équatorial est de 317 mm, la longueur utile, en association avec le logement alésé dans l'extrémité 605, de 269 mm, et la conicité de 1/6. Le pas du filetage est de 6,35 mm. Ce nipple est conforme au brevet DE 3324692.

Le demi-nipple inférieur 712 du nipple 7 f est identique aux demi-nipples 701 et 702 de la figure 7 a. Le demi-nipple supérieur 711 du nipple 7 f associé à l'extrémité 607 de l'électrode 6 d, présente un diamètre équatorial de 317 mm, une longueur utile de 269 mm et une conicité de 0,25. Le pas du filetage est de 5,35 mm et a été calculé pour que la valeur moyenne du sinus de l'angle que fait la tangente au sommet du filet avec le plan équatorial du nipple soit égale à la valeur moyenne que prend le sinus de cet angle dans le nipple conforme à la norme internationale, à savoir $7 \times 10^{-3}$. Toutefois, dans les cas où le risque de dévissage du joint est faible, on pourra utiliser sans inconvénient le pas de 6,35 mm pour le filetage usiné sur ce demi-nipple. Quel que soit le pas retenu pour le filetage, le nipple 7 f est conforme à la présente invention.

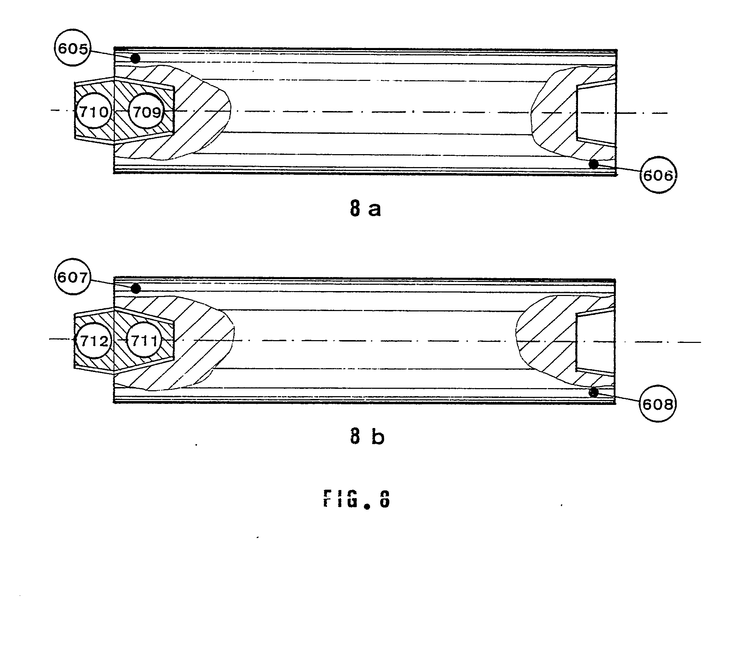

La figure 8 a représente un assemblage de l'électrode 6 c avec le nipple 7 e. Conformément à l'invention, le demi-nipple 709 a été vissé à l'intérieur du logement porté par l'extrémité 605. De ce fait, le demi-nipple 710, qui est conforme à la norme internationale, est à l'extérieur. L'avantage de cet assemblage est qu'il est compatible avec un lot d'électrodes conforme à la norme internationale. De plus, l'extrémité qui porte le logement dont la profondeur utile est la plus importante se trouvera ainsi au-dessus du plan de joint avec l'électrode à laquelle cette extrémité sera assemblée sur la colonne, ce qui limitera l'importance de la chute de pointe lorsque ce joint nipplé arrivera dans l'arc.

La figure 8 b représente un assemblage conforme à l'invention de l'électrode 6 d avec le nipple 7 f. Là encore, le demi-nipple 711 qui présente la longueur utile la plus importante, a été vissé à l'intérieur du logement porté par l'extrémité 607 afin de limiter l'importance de la chute de pointe.

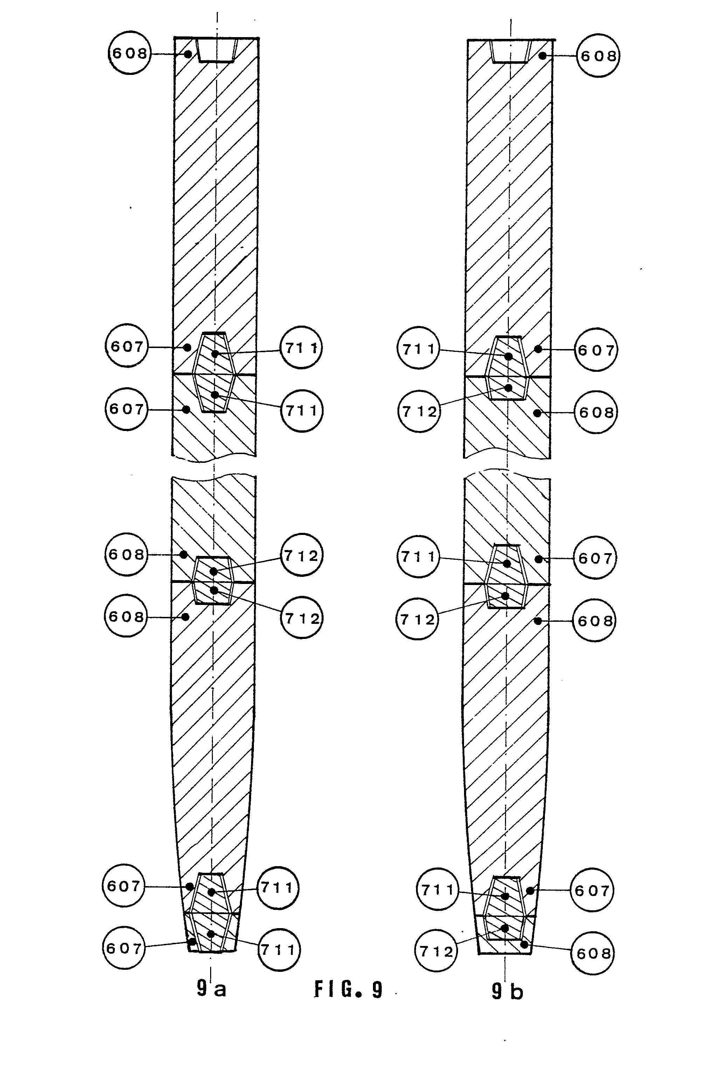

La figure 9 a représente une colonne d'électrodes conforme à l'invention utilisant quatre électrodes 6 d, un nipple conforme à la norme internationale, et deux nipples conformes à l'invention constitués de deux demi-nipples identiques au demi-nipple 711. La disposition adoptée sure cette colonne consiste à assembler les extrémités sommet de cuisson ensemble; cette technique est réputée donner à la colonne une meilleure résistance à la flexion. L'invention consiste à renforcer sélectivement les joints constitués par les extrémités sommet, en employant dans ces joints des nipples et des logements conformes à la présente invention. Les joints constitués de deux extrémités pied sont formes à la norme internationale. De ce fait, la longueur moyenne des nipples employés sur une telle colonne au standard "long", ce qui conduit à un prix de revient inchangé par rapport à ce standard.

La figure 9 b représente une colonne conforme à l'invention utilisant quatre électrodes 6 d et trois nipples 7 f. Les joints nipplés de cette colonne sont donc tous identiques, et utilisent d'un même côté du plan de joint un logement de nipple et un demi-nipple dont la valeur d'au moins un des éléments géométriques primaires est différente de la valeur de l'élément géométrique primaire correspondant du logement et du demi-nipple situés de l'autre côté du plan de joint.

La longueur des nipples employés sur cette colonne est identique à la longueur des nipples d'une colonne utilisant le standard "long". Le prix de revient est donc également inchangé par rapport à ce standard. Cette disposition rassemble un grand nombre d'avantages propres à la présente invention;

-on peut utiliser des couples électrode-nipple préassemblés tels que celui décrit à la figure 8 b. Ces assemblages sont compatibles avec toute électrode et tout nipple conformes à la norme internationale.

-le demi-nipple 711, qui possède la conicité la plus élevée et présente le plus grand risque de dévissage pourra être collé efficacement au cours du préassemblage, comme par exemple préconisé par le brevet DE 2226230.

-au cours de l'assemblage du couple électrode-nipple sur la colonne, l'extrémité 607 qui porte le logement le plus profond se trouvera automatiquement au-dessus du plan de joint avec l'électrode à laquelle elle sera assemblée. Lorsque le fond du logement inférieur arrive en pointe de colonne, il arrive fréquemment que le "mégot" constitué par la paroi du logement inférieur tombe dans le bain. La réduction de la profondeur utile du logement inférieur réduit ainsi l'importance de cette chute de pointe.

-enfin, sur chaque joint, l'extrémité mécaniquement la plus faible, à savoir le sommet cuisson, est sélectivement renforcée par l'utilisation d'un logement présentant une plus grande épaisseur utile. Le renforcement de la partie la plus faible du joint concourt efficacement à l'amélioration de la résistance à la flexion du joint dans son ensemble.

TABLEAU 1

| Figure | Numéro d'extré-mité | Epaisseur utile (mm) 11 | $\frac{11}{Re}$ % | Profon-deur utile (mm) 12 | Diamè-tre d'entrée (mm) 13 | Coni-cité C1 | Pas du file-tage (mm) 15 | Demi-nipple associé |
|---|---|---|---|---|---|---|---|---|
| 6 a | 601 | 183 | 60 | 168 | 318 | 0,22 | 6,35 | 705 |
|     | 602 | 183 | 60 | 168 | 318 | 0,22 | 6,35 | 706 |
| 6 b | 603 | - 182 - | 60 | 219 | 318 | 1/6 | 6,35 | 707 |
|     | 604 | 174 | 57 | 168 | 318 | 1/6 | 6,35 | 708 |
| 6 c | 605 | 191 | 63 | 269 | 318 | 1/6 | 6,35 | 709 |
|     | 606 | 174 | 57 | 168 | 318 | 1/6 | 6,35 | 710 |
| 6 d | 607 | 213 | 70 | 269 | 318 | 0,25 | 5,35 | 711 |
|     | 608 | 174 | 57 | 168 | 318 | 1/6 | 6,35 | 712 |

TABLEAU 2

| Figure | Demi-nipple | Diamètre équatorial (mm) 16 | Longueur utile (mm) 17 | Coni-cité C2 | Pas du filetage (mm) 19 | Extrémité d'électrode associée |
|---|---|---|---|---|---|---|
| 7 a | 701 | 317 | 168 | 1/6 | 6,35 | 604 |
|     | 702 | 317 | 168 | 1/6 | 6,35 | 604 |
| 7 b | 703 | 317 | 219 | 1/6 | 6,35 | 603 |
|     | 704 | 317 | 219 | 1/6 | 6,35 | 603 |
| 7 c | 705 | 317 | 168 | 0,22 | 6,35 | 601 |
|     | 706 | 317 | 168 | 0,22 | 6,35 | 602 |
| 7 d | 707 | 317 | 219 | 1/6 | 6,35 | 603 |
|     | 708 | 317 | 168 | 1/6 | 6,35 | 604 |
| 7 e | 709 | 317 | 269 | 1/6 | 6,35 | 605 |
|     | 710 | 317 | 168 | 1/6 | 6,35 | 606 |
| 7 f | 711 | 317 | 269 | 0,25 | 5,35 | 607 |
|     | 712 | 317 | 168 | 1/6 | 6,35 | 608 |

## Revendications

1) Electrode cylindrique, notamment pour four à arc électrique, portant un logement conique fileté alésé dans au moins une de ses deux faces d'extrémité, et nipple biconique fileté destiné à assembler la dite électrode avec une autre électrode, caractérisés par le fait qu'un au moins des logements coniques filetés portés par la dite électrode présente une conicité (C1) supérieure ou égale à 0,17 et inférieure ou égale à 0,57 et que, en association avec un au moins des deux demi-nipples constituant le dit nipple, le rapport de l'épaisseur utile (11) de la paroi du dit logement au rayon (Re) du corps de la dite électrode est supérieur ou égal à la fois à 0,57 et à la valeur obtenue en additionnant 0,96 fois la conicité (C1) du dit logement et 0,35.

2) Electrode et nipple suivant la revendication 1 caractérisés par le fait que, pour tout logement conique fileté alésé dans une face d'extrémité de la dite électrode dont la conicité (C1) est supérieure ou égale à 0,17, et pour le demi-nipple appartenant au dit nipple et destiné à être vissé à l'intérieur du dit logement, le pas du filetage est tel que la valeur moyenne du sinus de l'angle que fait la tangente au sommet du filet avec le plan de la dite face d'extrémité de l'électrode ou le plan équatorial du dit nipple est égale à la valeur moyenne que prend le sinus du dit angle dans le logement de nipple et le nipple conformes à la norme internationale IEC 239.

3) Electrode cylindrique, notamment pour four à arc électrique, portant un logement conique fileté alésé dans chacune de ses deux faces d'extrémité, et dont la valeur d'un au moins des éléments géométriques primaires du logement alésé dans une face d'extrémité, à savoir diamètre d'entrée - (13), conicité (C1), pas du filetage (15) et, définis en association avec le demi-nipple appartenant au nipple biconique fileté destiné à être vissé à l'intérieur du dit logement pour assembler la dite extrémité avec l'extrémité d'une autre électrode, épaisseur utile de paroi (11) et longueur utile (12), est différente de la valeur de l'élément géométrique primaire correspondant du logement alésé dans l'autre face d'extrémité, éventuellement défini en association avec le demi-nipple appartenant au nipple biconique fileté destiné à être vissé dans le logement alésé dans la dite autre face d'extrémité pour assembler la dite autre extrémité avec l'extrémité d'une autre électrode, caractérisée par le fait que la valeur des éléments géométriques primaires du logement alésé dans chacune des faces d'extrémité est choisie en fonction de la résistance mécanique de la dite extrémité et/ou de la position de la dite extrémité par rapport au plan de joint avec l'électrode à laquelle la dite extrémité sera assemblée dans la colonne.

4) Nipple biconique fileté destiné à assembler deux électrodes cylindriques, notamment pour four à arc électrique, portant chacune un logement conique fileté alésé dans au moins une de leurs deux faces d'extrémité, caractérisé par le fait que la valeur d'un au moins parmi trois des éléments géométriques primaires d'un des deux demi-nipples constituant le dit nipple, à savoir diamètre équatorial (16), conicité (C2) et pas du filetage (19), est différente de la valeur de l'élément géométrique primaire correspondant de l'autre demi-nipple constituant le dit nipple.

5) Assemblage d'un nipple et d'une électrode conforme à la revendication 3 caractérisé par le fait qu'un demi-nipple appartenant au dit nipple et dont l'ensemble des valeurs des éléments géométriques primaires est conforme à une norme internationale ou à un standard de forme connu est à l'extérieur de la dite électrode, alors que l'autre demi-nipple appartenant au dit nipple est vissé à l'intérieur d'un des deux logements alésés dans la dite électrode.

6) Assemblage d'un nipple et d'une électrode conforme à la revendication 3 caractérisé par le fait que le demi-nipple appartenant au dit nipple dont la longueur utile est la plus grande est vissé à l'intérieur d'un des deux logements alésés dans la dite électrode.

7) Colonne constituée d'électrodes cylindriques, notamment pour four à arc électrique, portant un logement conique fileté alésé dans chacune de leurs deux faces d'extrémité, assemblées deux à deux par un nipple biconique fileté, caractérisée par le fait que chaque électrode constituant la colonne est telle que la valeur d'un au moins des éléments géométriques primaires d'un des deux logements de nipple portés par la dite électrode, éventuellement défini en association avec le demi-nipple vissé dans le dit logement, est différente de la valeur de l'élément géométrique primaire correspondant de l'autre logement porté par la dite électrode, éventuellement défini en association avec le demi-nipple vissé à l'intérieur du dit autre logement.

8) Colonne conforme à la revendication 7 caractérisée par le fait que chaque joint nipplé assemblant une extrémité d'électrode constituant la colonne à l'extrémité d'une autre électrode constituant la dite colonne est tel que le logement de nipple et le demi-nipple situés au-dessus du plan de joint présentent respectivement une valeur de profondeur utile et de longueur utile supérieure à la valeur de profondeur utile et de longueur utile du logement et du demi-nipple situés en-dessous du dit plan de joint.

FIG. 1a

FIG. 1b

( Δ )

$\vec{F}$

**F I G. 2**

( Δ )

$\vec{F}$

**F I G. 3**

FIG.4

FIG. 5

6 a

6 b

6 c

6 d

F I G. 6

7 a

7 b

7 c

7 d

7 e

7 f

FIG. 7

8 a

8 b

FIG. 8

FIG. 9

9a      9b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 376 024 (GREAT LAKES CARBON)<br>* Page 3, colonne de gauche, alinéa 3 * | 1,2 | H 05 B  7/14<br>H 05 B  7/085 |
| D,A | DE-A-3 324 692 (SIGRI)<br>* Colonne 6, lignes 1-10 * | 3-8 | |
| A | US-A-3 646 240 (LEWIS) | | |
| A | DE-C- 901 221 (HOFFMANN) | | |

DOMAINES TECHNIQUES RECHERCHES (Int. Cl.4)

H 05 B  7/00

Le présent rapport de recherche a été établi pour toutes les revendications

| Lieu de la recherche | Date d'achèvement de la recherche | Examinateur |
|---|---|---|
| LA HAYE | 26-08-1986 | RAUSCH R.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82